# EUROPÄISCHE PATENTSCHRIFT

(11) **EP 2 509 931 B1**
(45) Veröffentlichungstag und Bekanntmachung des Hinweises auf die Patenterteilung: **22.02.2017**
(21) Anmeldenummer: 10790937.6
(22) Anmeldetag: 09.12.2010
(51) Int. Cl.: C04B 41/00, C04B 41/64, C04B 41/49

(54) **MINERALWERKSTOFF**
MINERAL MATERIAL
MATÉRIAU MINÉRAL

(30) Priorität: 09.12.2009 DE 102009047755
(43) Veröffentlichungstag der Anmeldung: 17.10.2012
(73) Patentinhaber: Designquadrat Gbr, 50769 Köln (DE)
(72) Erfinder: ENDERT, Guido, 42799 Leichlingen (DE)
(74) Vertreter: Bals, Rüdiger
(86) Internationale Anmeldenummer: PCT/EP2010/069318
(87) Internationale Veröffentlichungsnummer: WO 2011/070127

(56) Entgegenhaltungen:
- EP-A1- 0 001 865
- EP-A1- 1 632 540
- DE-A1-102005 024 362
- GB-A- 880 060
- US-A- 2 997 448
- US-A- 3 350 827
- M.ZIELECKA,E.BUJNOWSKA: "Silicone-containing polymer matrices as protective coatings, Properties and applications", PROGRESS IN ORGANIC COATINGS, Bd. 55, 2006, Seiten 160-167, XP002627427,

## Beschreibung

Die vorliegende Erfindung betrifft einen kunstharzgebundenen Mineralwerkstoff, gemäß dem Oberbegriff des Anspruchs 1, der insbesondere auf einem Trägermaterial aufgebracht ist. Ferner ist die vorliegende Erfindung auch auf ein Beschichtungsverfahren eines Mineralwerkstoffes gemäß des Anspruchs 9 gerichtet.

Solche kunstharzgebundenen Mineralwerkstoffe sowie entsprechende Verfahren zu deren Beschichtung sind aus z. B. der Druckschrift "EP 0 001 865 A1" bekannt und im täglichen Leben in den verschiedensten Anwendungen weit verbreitet. So werden die Mineralwerkstoffe vorteilhafterweise in dekorativen Anwendungen eingesetzt. Man findet sie an Abfertigungsschaltern an Flughäfen, Bahnhöfen oder Busbahnhöfen genauso wie in Küchen, Bars oder Restaurant oder Empfangsschaltern und Konferenztischen. Auch als Wandverkleidungen, Trennwände und Deckenverkleidungen als auch an Säulen und Pfeilern sind sie einsetzbar. Auch werden ganze Waschbecken und -tische sowie Badewannen und dergleichen daraus hergestellt.

Allerdings sind solche kunstharzgebundenen Mineralwerkstoffe nicht kratzfest, weshalb sie bei häufigen Gebrauch, wie es bei den vorhergehend beschriebenen Einsatzfällen der Fall ist, häufig ausgeschliffen werden müssen, um wieder eine glatte, formschöne Oberfläche zu erhalten.

Ausgehend von dem zuvor beschriebenen Stand der Technik ist es daher Aufgabe der vorliegenden Erfindung, einen kunstharzgebundenen Mineralwerkstoff anzugeben, welcher kostengünstig und einfach herzustellen und trotzdem kratzfest gegenüber dem täglichen Gebrauch ist, insbesondere können Kratzfestigkeit und UV-Beständigkeit verbessert werden.

Die Lösung der Aufgabe wird durch die im Anspruch 1 angegebene Maßnahme erreicht, der folgende besondere Bedeutung zukommt.

Bei dem erfindungsgemäßen Mineralwerkstoff wird dieser in einer besonders einfachen Weise mit einer Beschichtung überzogen, die auf einer Silikonbasis hergestellt ist und im ausgehärteten Zustand eine besonders harte und kratzfeste Oberfläche des Mineralwerkstoffes bildet. Somit kann der Prozess, bei welchem der Mineralwerkstoff mit dem Kunstharz eine feste Verbindung eingeht, beibehalten werden, wobei nach jedem Herstellungsschritt des kunstharzgebundenen Mineralwerkstoffes sich lediglich ein Beschichtungsschritt anschließt, in welchem die Materialeigenschaften des Mineralwerkstoffes wesentlich verbessert werden. Mit Hilfe eines solchen Beschichtungsschrittes lassen sich auch schon im Einsatz befindliche Gegenstände, die aus einem solchen kunstharzgebundenen Mineralwerkstoff bestehen, nach dem Abschleifen in ihrer Kratzfestigkeit deutlich verbessern. Erste Versuche zur Beschichtung haben überraschend ergeben, dass sich die Beschichtung unlösbar bzw. fest mit dem Mineralwerkstoff verbunden hat. Auch hat sich gezeigt, dass die Verschleißfestigkeit, insbesondere die Kratzfestigkeit, durch die genannte Beschichtung maßgeblich verbessert werden konnte, obwohl die Beschichtungsdicke im Vergleich zur Dicke des Mineralwerkstoffs verschwindend gering ist. Ferner wird durch die Beschichtung eine sehr gute UV-Beständigkeit erzielt. Bei einer durchsichtigen Beschichtung bleibt die wohlgefällige Oberfläche des Mineralwerkstoffs optisch vollwertig erhalten.

Unter dem genannten Mineralwerkstoff wird im Sinne der Erfindung ein künstlich hergestellter Werkstoff verstanden, der in der Regel feste Bestandteile (Mineralstoffe) aufweist, die mit einem Harz, insbesondere Kunstharz untereinander verbunden werden. Diese Mineralwerkstoffe werden auch als Acryl-Stein oder Engineered Stone bezeichnet und verfügen in der Regel über eine glatte Oberfläche. Aufgrund ihrer guten Hitzebeständigkeit gegenüber kochendem Wasser und ihrer schweren Entflammbarkeit (nach Bedingung B1) eignen sich derartige Mineralwerkstoffe hervorragend im Haus, insbesondere in der Küche, z. B. als Küchenarbeitsplatte. Hinzu kommt die Lebensmittelechtheit, sodass auch ein direkter Kontakt mit Lebensmitteln unproblematisch und gesundheitlich unbedenklich ist.

Erfindungsgemäß ist die Beschichtung sehr dünn und weist nur wenige Mikrometer auf, weshalb nur sehr wenig von der zur Beschichtung notwendigen Substanz benötigt wird. Die Schichtdicke der Beschichtung beträgt dabei 4 - 8 µm.

Durch die erfindungsgemäße Beschichtung des Mineralwerkstoffes wird die Kratzfestigkeit signifikant verbessert. Hierbei kann die Kratzfestigkeit des beschichteten Mineralwerkstoffes wenigstens verdoppelt werden im Vergleich zum unbeschichteten Mineralwerkstoff. In den Versuchen hat sich gezeigt, dass die Kratzfestigkeit des beschichteten Mineralwerkstoffes auch bis zum und über den Faktor 10 hinaus verbessert werden konnte im Vergleich zum unbeschichteten Mineralwerkstoff.

Ferner ist die Beschichtung als Polymer ausgebildet. Solche Polymere sind weit verbreitet und daher kostengünstig erhältlich. Die Beschichtung kann ohne Grundierung direkt auf der Oberfläche des Mineralwerkstoffes aufgetragen werden. Um die Haftung der Beschichtung ggf. zu verbessern, kann zusätzlich eine Grundierung zum Einsatz kommen. Die Oberfläche des Mineralwerkstoffes muss nicht mechanisch oder chemisch bearbeitet werden, z. B. Aufrauen oder Anätzen der Oberfläche, für die Beschichtung. Allerdings sollte die entsprechende Oberfläche des Mineralwerkstoffes gereinigt werden, um z. B. Fette oder Öle zu entfernen, bevor die Beschichtung aufgebracht wird.

Insbesondere lässt sich die genannte Beschichtung in einer sehr einfachen Art und Weise auf den Mineralwerkstoff aufbringen. Entweder wird der Mineralwerkstoff mit der die Beschichtung bildenden Substanz besprüht oder der Mineralwerkstoff wird in diese Substanz eingetaucht. Auch ein Übergießen mit der Substanz, welche die Beschichtung des Mineralwerkstoffes bildet, ist denkbar.

Auch ist es denkbar, dass dem Mineralwerkstoff, der mit dem Kunstharz gebunden ist, ein Farbstoff beigemischt. Es besteht auch die Möglichkeit, dass das Kunstharz oder der Mineralwerkstoff selbst farbig ausgebildet sind. Bei solchen farbigen, kunstharzgebundenen Mineralwerkstoffen hat die aufgebrachte Beschichtung die zusätzliche Wirkung, dass das so behandelte Material gleichzeitig UV-beständig ist. Dadurch vergrößert sich das Anwendungsgebiet des beschichteten Mineralwerkstoffes wesentlich, da es nicht nur in Innenräumen, sondern auch außerhalb von Gebäuden verwendet werden kann. Der ohne die Beschichtung auftretende Effekt, dass sich die Farbe bei Anwendungen an Gehäusefassaden oder ähnlichem unter dem auftretenden UV-Einfluss der Umgebung ändert, wird durch diese Beschichtung mit dem silikonhaltigen Material zuverlässig vermieden. Die ersten Versuche haben auch überraschend und eindrucksvoll gezeigt, dass selbst eine durchsichtige Beschichtung die UV-Beständigkeit drastisch verbessert. So ist zu erwarten, dass die Farben des Mineralwerkstoffs über viele Jahre bzw. Jahrzehnte auch bei starker Sonneneinstrahlung im Außenbereich unverändert erhalten bleiben.

Zweckmäßigerweise wird der kunstharzgebundene Mineralwerkstoff als ebene Platte ausgeformt und weist eine Schichtdicke unter 15 mm, vorzugsweise ca. 4 -10 mm auf. Eine solche Mineralwerkstoffplatte lässt sich leicht für die vielfältigsten Anwendungen weiterverarbeiten und kann sowohl horizontal als auch vertikal eingesetzt werden.

Auf Grund der geringen Schichtdicke der Mineralwerkstoffplatte lässt sich diese auch einfach einem Umformprozess unterziehen, in welchem beispielsweise bei Arbeitsplatten für Küchen und Bäder Waschbecken ausgeformt werden. Ein bevorzugter Umformprozess ist dabei das Tiefziehen.

Um Kosten zu sparen, wird der Mineralwerkstoff in der Regel nur als Deckmaterial verwendet. Er ist dabei als Oberfläche auf ein Trägersubstrat aufgebracht. Als Trägerwerkstoff wird dabei bevorzugt Holz oder ein vergleichbares Material eingesetzt, wodurch die Stabilität einer so gefertigten Arbeitsplatte oder einer anderen Konstruktion erreicht wird.

Eine weitere Weiterbildung der Erfindung betrifft ein Verfahren zur Beschichtung eines Mineralwerkstoffes nach dem Anspruch 9. Dabei werden die festen Bestandteile des Mineralwerkstoffes mit dem Kunstharz vermischt und zu einer festen Verbindung ausgehärtet. Dazu wird ein Zweikomponentenharzkleber genutzt, welcher beispielsweise bei Raumtemperatur aushärtet. Um einen besonders kostengünstigen und trotzdem kratzfesten Mineralwerkstoff zu erhalten, wird der Mineralwerkstoff beschichtet, wobei zur Beschichtung eine silikonhaltige, flüssige Substanz verwendet wird, welche nach einer Phase der Aushärtung besonders hart und kratzfest ausgebildet ist, dabei aber nicht in den Mineralwerkstoff einzieht. Die ausgehärtete Beschichtung kann dabei die verschiedensten optischen Eigenschaften aufweisen, indem sie beispielsweise matt, glänzend oder durchsichtig ausgebildet ist.

Optimal ist es, nach dem Aufbringen der silikonhaltigen Substanz auf den kunstharzgebundenen Mineralwerkstoff, diese durch den Einfluss von Wärme oder von UV-Strahlung auszuhärten, wobei eine Beschichtung entsteht, welche den Mineralwerkstoff zuverlässig vor UV-Strahlung schützt und gleichzeitig eine kratzfeste Oberfläche bildet.

Das Aufbringen der silikonhaltigen Flüssigkeit auf den kunstharzgebundenen Mineralwerkstoff erfolgt dabei in sehr einfacher Weise, indem der Mineralwerkstoff in die silikonhaltige Flüssigkeit eingetaucht wird oder mit dieser übergossen wird. Es besteht auch die Möglichkeit, dass die Flüssigkeit auf den Mineralwerkstoff aufgesprüht wird. In jedem Fall bildet die Flüssigkeit eine sehr dünne Schicht auf dem Mineralwerkstoff, welche trotz der geringen Schichtdicke die Eigenschaften der hohen Beständigkeit gegen Kratzer und UV-Strahlung aufweist.

In einer bevorzugten Ausführungsform wird der Mineralwerkstoff mit dem Kunstharz zusammengeführt und dabei gleichzeitig zu einer Mineralwerkstoffplatte ausgebildet, vorzugsweise ausgegossen. Im darauf folgenden Schritt erfolgt die Beschichtung der Platte mit der silikonhaltigen Flüssigkeit, welche anschließend ausgehärtet wird. Um die gewünschte Form, wie beispielsweise die eines Waschbeckens zu erzielen, wird die beschichtete Mineralwerkstoffplatte in einem letzten Schritt tiefgezogen. Auch ist es denkbar, die unbeschichtete Mineralwerkstoffplatte zunächst umzuformen und anschließend erst zu beschichten.

Alternativ zum Gießverfahren wird erfindungsgemäß der Mineralwerkstoff zusammen mit dem Kunstharz in die gewünschte Form mittels eines Spritzgussverfahrens gebracht. Nach seiner Verfestigung wird der kunstharzgebundene Mineralwerkstoff mit der silikonhaltigen Flüssigkeit besprüht, bzw. beschichtet welche dann ausgehärtet wird. Auf diese Weise lassen sich beliebige, aus Mineralwerkstoffen geschaffene Gegenstände in den unterschiedlichsten Formen einfach herstellen und beschichten.

Weitere Maßnahmen und Vorteile der Erfindung ergeben sich aus den Ansprüchen, der nachfolgenden Beschreibung und den Zeichnungen. Ferner können die in den Ansprüchen und in der Beschreibung erwähnten Merkmale jeweils für sich oder in Kombination erfindungswesentlich sein. Merkmale und Details, die im Zusammenhang mit dem erfindungsgemäßen Verfahren beschrieben sind, gelten dabei selbstverständlich auch im Zusammenhang mit der erfindungsgemäßen Vorrichtung und umgekehrt. In den Zeichnungen ist die Erfindung in zwei Ausführungsbeispielen dargestellt. Es zeigen:
- Fig. 1: einen Querschnitt durch eine ebene Arbeitsplatte aus kunstharzgebundenen Mineralwerkstoff und
- Fig. 2: einen Querschnitt durch ein umgeformtes Objekt aus kunstharzgebundenen Mineralwerkstoff.

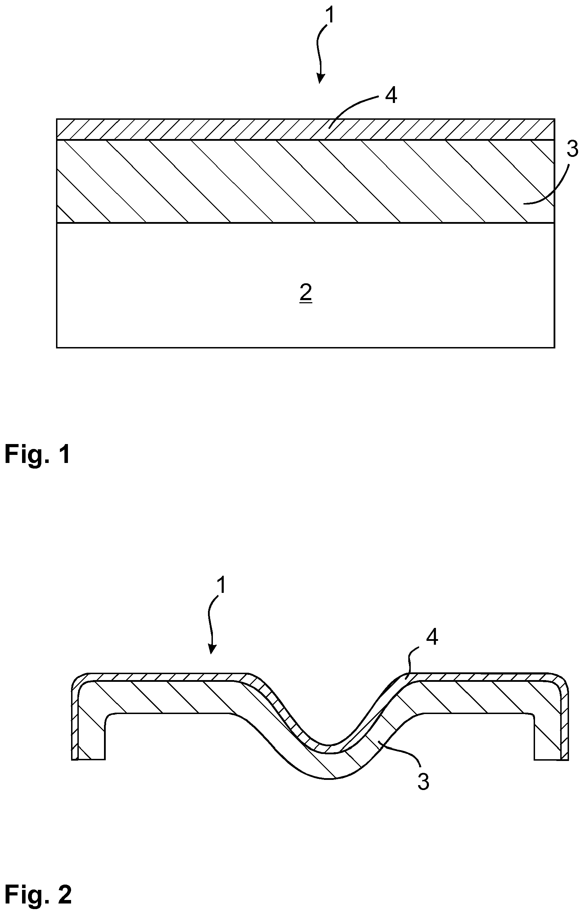

In Fig. 1 ist eine aus dem erfindungsgemäßen kunstharzgebundenen Mineralwerkstoff hergestellte Arbeitsplatte 1 dargestellt, wie sie in vielen Bereichen des täglichen Lebens Anwendung findet. Eine solche Arbeitplatte 1 kann an Serviceschaltern und in Restaurants, Küchen genauso Verwendung finden wie als Außenfassade von Gebäuden und Fenstern. Die Fig. 1 stellt einen schematischen Querschnitt durch die Arbeitsplatte 1 dar, in der die tatsächlichen Proportionen nicht wiedergegeben sind. Aufgrund der sehr unterschiedlichen Dicken der Beschichtung und des Mineralwerkstoffs ist dieses auch kaum möglich.

Die Arbeitsplatte 1 weist z. B. ein aus Holz bestehendes massives oder rahmenbasiertes Trägermaterial 2 auf, auf welchem eine ca. 4 bis 10 mm dicke Platte 3 des kunstharzgebundenen Mineralwerkstoffes angeordnet ist. Im vorliegenden Fall wird als Mineralwerkstoff HI-MACS® verwendet, ein Mineralwerkstoff, welcher auch als Acryl-Stein bezeichnet wird und eine besonders glatte und harte Oberfläche bildet, die in vielen Farben erhältlich ist. Die gesamte Oberfläche der aus dem kunstharzgebundenen Mineralwerkstoff bestehenden Platte 3 ist mit einer sehr dünnen Beschichtung 4 versehen, die nur wenige Mikrometer beträgt. Vorzugsweise beträgt die Schichtdicke der Beschichtung 4 bis 8 µm. Vorteilhafterweise werden für die Beschichtung 4 auf einer Silikonbasis gebildete Substanzen genutzt, die kommerziell unter den Handelsnamen Durethan, Makrolon oder Lexan, Pocan, Crastin u. ä. bekannt sind. Die Beschichtung kann dabei glänzend, matt oder durchsichtig ausgebildet sein.

Zur Herstellung einer solchen Arbeitsplatte 1 wird der Farbpigmente aufweisende Mineralwerkstoff gemeinsam mit dem Kunstharz und/oder einem Zweikomponentenharzkleber vermischt und in eine plattenähnliche Form gebracht. Nach der Aushärtung des Harzklebers bildet der Mineralwerkstoff gemeinsam mit dem Kunstharz eine Platte 3, die weiter verarbeitet werden kann. Auf die Platte 3 aus Mineralwerkstoff wird anschließend die silikonhaltige Flüssigkeit, welche die Konsistenz von Wasser aufweist, aufgesprüht und bildet eine Schicht 4 von mehreren Mikrometern. Diese Schicht 4 wird anschließend entweder mit einer UV-Strahlung oder durch eine Wärmebehandlung bei Temperaturen von 120 bis 130 °C ausgehärtet. Eine solche Schicht 4 weist eine sehr hohe Kratzfestigkeit insbesondere im Vergleich zum kunstharzgebundenen Mineralwerkstoff auf und ist besonders unempfindlich gegenüber UV-Einstrahlungen und schützt somit den UV-empfindlichen Mineralwerkstoff zuverlässig.

Anschließend wird die so behandelte, aus dem Mineralwerkstoff hergestellte Platte 3 auf das Holz als Trägerkörper 2 aufgebracht, wodurch der Platte 3 eine besondere Stabilität verliehen wird. Es besteht aber auch die Möglichkeit, dass die Platte 3 aus Mineralwerkstoff zuerst auf die Trägerplatte 2 aus Holz aufgebracht wird und anschließend mit der silikonhaltigen Flüssigkeit beschichtet und ausgehärtet wird.

Die eben geformten Platten 3 des Mineralwerkstoffes können durch Tiefziehen weiter verarbeitet bzw. umgeformt werden. Vor dem Umformvorgang ist die Platte 3 bereits mit der Beschichtung 4 versehen. Die Beschichtung 4 ist ausreichend robust, um den Tiefziehprozess zu überstehen. So können in die ebene Platte auch Waschbecken oder ähnliches eingeformt werden. Allerdings ist es auch möglich diese Formen direkt im Fertigungsverfahren, in welchem der Mineralwerkstoff mit dem Kunstharz verbunden wird, herzustellen und anschließend erst mit der Beschichtung 4 zu versehen.

In der Fig. 2 ist ein solches Ausführungsbeispiel mit einem tiefgezogenen Mineralwerkstoff dargestellt. Aufgrund der entsprechenden Umformung der Platte 3 des Mineralwerkstoffes ist diese stabil genug, um ohne einen Trägerwerkstoff 2 auszukommen. Somit kann durch die konkrete Struktur und/oder die Formgebung der Platte 3 des Mineralwerkstoffes die erforderliche Stabilität erzeugt werden. In der Fig. 2 ist die ursprünglich eben geformte Platte 3 des Mineralwerkstoffes tiefgezogen worden zu einem Wasserablauf bzw. Waschbecken. Auch in der Fig. 2 stellt der schematische Querschnitt durch das Modell nur eine Veranschaulichung dar, da die tatsächlichen Proportionen der Schichtdicken bzw. Materialdicken zwischen der Beschichtung 4 und der Dicke der Platte 3 nicht maßstabsgetreu wiedergegeben werden können.

### Bezugzeichenliste

- 1: Arbeitsplatte
- 2: Trägerwerkstoff
- 3: Platte aus kunstharzgebundenen Mineralwerkstoff
- 4: Beschichtung

## Patentansprüche

1. Kunstharzgebundener Mineralwerkstoff, welcher insbesondere auf einem Trägerwerkstoff (2) angeordnet ist,
**dadurch gekennzeichnet,**
**dass** der Mineralwerkstoff (3) eine ausgehärtete, Silikon umfassende Beschichtung (4) aufweist,
wobei die Beschichtung (4) eine Schichtdicke von 4 - 8 µm aufweist.

2. Mineralwerkstoff nach Anspruch 1,
**dadurch gekennzeichnet,**
**dass** die Beschichtung (4) ein Polymer umfasst.

3. Mineralwerkstoff nach Anspruch 1 oder 2,
**dadurch gekennzeichnet,**
**dass** die Beschichtung (4) auf den Mineralwerkstoff (3) durch Sprühen oder Tauchen oder Übergießen aufgebracht ist.

4. Mineralwerkstoff nach mindestens einem der vorhergehenden Ansprüche,
**dadurch gekennzeichnet,**
**dass** dem kunstharzgebundenen Mineralwerkstoff (3) ein Farbstoff beigemischt ist oder der Mineralwerkstoff (3) selbst farbig ausgebildet ist.

5. Mineralwerkstoff nach mindestens einem der vorhergehenden Ansprüche,
**dadurch gekennzeichnet,**
**dass** der Mineralwerkstoff (3) plattenähnlich mit insbesondere einer Schichtdicke von weniger als 15 mm ausgebildet ist.

6. Mineralwerkstoff nach Anspruch 5,
**dadurch gekennzeichnet**,
der plattenähnlich ausgebildete Mineralwerkstoff (3) umformbar ist.

7. Mineralwerkstoff nach mindestens einem der vorhergehenden Ansprüche,
**dadurch gekennzeichnet,**
**dass** der die Beschichtung (4) aufweisende Mineralwerkstoff (3) als Oberfläche auf dem Trägerwerkstoff (2) angeordnet ist.

8. Mineralwerkstoff nach Anspruch 7.
**dadurch gekennzeichnet,**
**dass** der Trägerwerkstoff Holz (2) umfasst.

9. Verfahren zur Beschichtung eine Mineralwerkstoffes, wobei die Bestandteile des Mineralwerkstoffes (3) mit einem Kunstharz eine feste Verbindung eingegangen sind,
**dadurch gekennzeichnet,**
**dass** zur Beschichtung (4) eine silikonhaltige, aushärtbare Flüssigkeit verwendet wird, wobei der Mineralwerkstoff (3) mit dem Kunstharz durch Gießen zu einer Mineralwerkstoffplatte oder ein Spritzgussverfahren in die vorgegebene Form gebracht wird, anschließend mit der silikonhaltigen Flüssigkeit beschichtet wird und danach die Aushärtung der silikonhaltigen Flüssigkeit erfolgt.

10. Verfahren nach Anspruch 9,
**dadurch gekennzeichnet,**
**dass** die silikonhaltige Flüssigkeit nach dem Aufbringen auf den Mineralwerkstoff (3) mittels UV-Licht oder Wärme ausgehärtet wird.

11. Verfahren nach Anspruch 9 oder 10,
**dadurch gekennzeichnet,**
**dass** die silikonhaltige Flüssigkeit auf den Mineralwerkstoff (3) aufgesprüht wird oder der Mineralwerkstoff (3) in die Flüssigkeit getaucht oder mit dieser übergossen wird.

12. Verfahren nach Anspruch 9, 10 oder 11,
**dadurch gekennzeichnet,**
**dass** der Mineralwerkstoff (3) gemeinsam mit dem Kunstharz zu einer plattenähnlichen Form ausgebildet wird, welche anschließend mit der silikonhaltigen Flüssigkeit beschichtet wird und nach dem Aushärten der Flüssigkeit der plattenähnlich ausgebildete Mineralwerkstoff (3) zur Ausbildung einer vorgegebenen Form tiefgezogen wird.

13. Verfahren nach einem Anspruch 9 bis 12,
**dadurch gekennzeichnet,**
**dass** der Mineralwerkstoff (3) gemeinsam mit dem Kunstharz zu einer plattenähnlichen Form ausgebildet wird, welche anschließend zur Ausbildung einer vorgegebenen Form tiefgezogen wird und danach mit der silikonhaltigen Flüssigkeit beschichtet wird.

## Claims

1. A synthetic resin-bonded mineral material, which is arranged in particular on a carrier material (2),
**characterized in that**
the mineral material (3) has a cured coating (4) comprising silicone,
wherein the coating (4) has a layer thickness of 4 - 8 µm.

2. The mineral material according to Claim 1,
**characterized in that**
the coating (4) comprises a polymer.

3. The mineral material according to Claim 1 or 2,
**characterized in that**
the coating (4) is applied onto the mineral material (3) by spraying or immersing or dousing.

4. The mineral material according to at least one of the preceding claims,
**characterized in that**
a dye is admixed to the synthetic resin-bonded mineral material (3) or the mineral material (3) is itself configured in a coloured manner.

5. The mineral material according to at least one of the preceding claims,
**characterized in that**
the mineral material (3) is configured in a plate-like manner with, in particular, a layer thickness of less than 15 mm.

6. The mineral material according to Claim 5,
**characterized in that**
the mineral material (3) configured in a plate-like manner is formable.

7. The mineral material according to at least one of the preceding claims,
**characterized in that**
the mineral material (3) having the coating (4) is arranged as a surface on the carrier material (2).

8. The mineral material according to Claim 7,
**characterized in that**
the carrier material comprises wood (2).

9. A method for coating a mineral material, wherein the components of the mineral material (3) have entered a fixed connection with a synthetic resin,
**characterized in that**
for the coating (4) a curable fluid containing silicone is used, wherein the mineral material (3) with the synthetic resin is brought to a mineral material plate by casting or into the predetermined form by an injection moulding method, is subsequently coated with the silicone-containing fluid and thereafter the curing of the silicone-containing fluid takes place.

10. The method according to Claim 9,
**characterized in that**
the silicone-containing fluid, after application onto the mineral material (3), is cured by means of UV light or heat.

11. The method according to Claim 9 or 10,
**characterized in that**
the silicone-containing fluid is sprayed onto the mineral material (3) or the mineral material (3) is immersed into the fluid or is doused with the latter.

12. The method according to Claim 9, 10 or 11,
**characterized in that**
the mineral material (3) together with the synthetic resin is configured to a plate-like shape, which is subsequently coated with the silicone-containing fluid and after the curing of the fluid, the mineral material (3), configured in a plate-like manner, is deep-drawn for the configuration of a predetermined shape.

13. The method according to a Claim 9 to 12,
**characterized in that**
the mineral material (3) together with the synthetic resin is configured to a plate-like shape, which is subsequently deep-drawn for the configuration of a predetermined shape and thereafter is coated with the silicone-containing fluid.

## Revendications

1. Matériau minéral lié par une résine synthétique, lequel est disposé en particulier sur un matériau de support (2),
**caractérisé en ce**
**que** le matériau minéral (3) présente un revêtement (4) durci comprenant du silicone,
le revêtement (4) présentant une épaisseur de couche de 4 à 8 µm.

2. Matériau minéral selon la revendication 1,
**caractérisé en ce**
**que** le revêtement (4) comprend un polymère.

3. Matériau minéral selon la revendication 1 ou 2,
**caractérisé en ce**
**que** le revêtement (4) est appliqué sur le matériau minéral par vaporisation, immersion ou arrosage.

4. Matériau minéral selon au moins l'une des revendications précédentes,
**caractérisé en ce**
**qu'**un colorant est ajouté au matériau minéral (3) lié par une résine synthétique ou que le matériau minéral (3) est coloré intrinsèquement.

5. Matériau minéral selon au moins l'une des revendications précédentes,
**caractérisé en ce**
**que** le matériau minéral (3) est réalisé en une forme similaire à une plaque, en particulier avec une épaisseur de couche de moins de 15 mm.

6. Matériau minéral selon la revendication 5,
**caractérisé en ce**
**que** le matériau minéral (3) réalisé de forme similaire à une plaque est déformable.

7. Matériau minéral selon au moins l'une des revendications précédentes,
**caractérisé en ce**
**que** le matériau minéral (3) présentant le revêtement (4) est disposé en tant que surface sur le matériau de support (2).

8. Matériau minéral selon la revendication 7,
**caractérisé en ce**
**que** le matériau de support (2) comprend du bois.

9. Procédé de revêtement d'un matériau minéral, les composants du matériau minéral (3) étant en liaison solide avec une résine synthétique,
**caractérisé en ce**
**qu'**un liquide durcissable, contenant du silicone, est utilisé pour le revêtement (4), le matériau minéral (3) lié à la résine synthétique étant formé en une plaque de matériau minéral par coulage ou mis dans la forme prédéfinie par un procédé de moulage par injection, puis revêtu du liquide contenant du silicone et le liquide contenant du silicone étant ensuite durci.

10. Procédé selon la revendication 9,
**caractérisé en ce**
**que** le liquide contenant du silicone est durci par exposition à la lumière UV ou à la chaleur après application sur le matériau minéral (3).

11. Procédé selon la revendication 9 ou 10,
**caractérisé en ce**
**que** le liquide contenant du silicone est vaporisé sur le matériau minéral (3) ou le matériau minéral (3) est immergé dans le liquide ou arrosé avec celui-ci.

12. Procédé selon la revendication 9, 10 ou 11,
**caractérisé en ce**
**que** le matériau minéral (3) lié à la résine synthétique est façonné en une forme similaire à une plaque, laquelle est ensuite revêtue du liquide contenant du silicone et, après le durcissement du liquide, le matériau minéral (3) façonné en une forme similaire à une plaque est embouti afin de produire une forme prédéfinie.

13. Procédé selon l'une des revendications 9 à 12,
**caractérisé en ce**
**que** le matériau minéral (3) lié à la résine synthétique est façonné en une forme similaire à une plaque, laquelle est ensuite emboutie afin de produire une forme prédéfinie puis revêtue du liquide contenant du silicone.
